# EUROPÄISCHE PATENTSCHRIFT

(11) **EP 4 179 608 B1**
(45) Veröffentlichungstag und Bekanntmachung des Hinweises auf die Patenterteilung: **24.04.2024**
(21) Anmeldenummer: 21743144.4
(22) Anmeldetag: 08.07.2021
(51) Int. Cl.: H02K 1/16, H02K 1/26, H02K 15/02

(54) **BLECHPAKETSEGMENT UND VERFAHREN ZU DESSEN HERSTELLUNG**
LAMINATED CORE SEGMENT AND METHOD OF MANUFACTURING SAME
SEGMENT DE PAQUET DE TÔLES ET SON PROCÉDÉ DE FABRICATION

(30) Priorität: 09.07.2020 EP 20185020
(43) Veröffentlichungstag der Anmeldung: 17.05.2023
(73) Patentinhaber: Flender GmbH, 46395 Bocholt (DE)
(72) Erfinder: ADLFINGER, Helmut, 90571 Schwaig b. Nürnberg (DE); LINDMEIER, Andreas, 94099 Ruhstorf (DE); RATZISBERGER, Dominik, 94149 Kößlarn (DE); JÖCKEL, Andreas, 90408 Nürnberg (DE); SCHOBER, Franz Xaver Michael, 94154 Neukirchen vorm Wald (DE)
(74) Vertreter: Michalski Hüttermann & Partner Patentanwälte mbB
(86) Internationale Anmeldenummer: PCT/EP2021/069013
(87) Internationale Veröffentlichungsnummer: WO 2022/008664

(56) Entgegenhaltungen:
- EP-A2- 1 467 470
- EP-A2- 1 780 869
- EP-A2- 2 388 888
- EP-B1- 2 409 380
- WO-A1-2014/124687
- WO-A2-2007/145471
- DE-A1- 2 629 532
- DE-A1- 2 844 743
- DE-U1-202005 003 518
- GB-A- 2 108 772

## Beschreibung

Die Erfindung betrifft einen Stator oder Rotor eines Generators großen Durchmessers, gebildet aus mehreren Blechpaketsegmenten, einen Generator mit derartigen Blechpaketsegmenten und ein Verfahren zur Herstellung von derartigen Blechpaketsegmenten.

Üblicherweise werden Statorwicklungen von Motoren sowie Generatoren in Form von Spulen in dafür vorgestanzte Nutenbleche eingebracht. Je nach Größe der Maschine ist es notwendig diese Statorbleche dabei in Umfangsrichtung zu segmentieren (teilen), da Elektrobleche nur in begrenzter Breite von den Walzwerken erzeugt werden.

Um die Abfallmenge, also den Blechschrott zu reduzieren, sind aus den Dokumenten US 2005/073210 A1 und DE 10 2010 031 105 A1 spiralförmig aufgebaute Blechpakete bekannt. Nachteilig dabei ist, dass sich ein partielles Aufwölben der Bleche einstellt, die ordnungsgemäßes Paketieren erschweren.

Aus DE 26 29 532 A1 ist ein Blechpaketsegment für einen Stator einer elektrischen Maschine bekannt, der aus Blechen mit trapezförmigen Zähnen für Wicklungen zusammengesetzt ist, wobei die Bleche an einer von den Wicklungen weg weisenden Rückseite eine Vielzahl an Kerben aufweisen.

Aus der GB 2 108 772 A ist eine dynamoelektrische Maschine mit einem laminierten Kern aus Blechen bekannt. Dort ist beschrieben, dass beim Walzen der Bleche in eine bestimmte Richtung die Kornorientierung in Zähnen und Joch beeinflusst werden kann.

Aus der WO 2014/124687 A1 ist eine elektromagnetische Maschine mit segmentiertem Stator und Zweischichtwicklung bekannt, die sich für eine Windkraftanlage eignet.

Aus EP 1 780 869 A2 und EP 1 467 470 A2 ist jeweils ein Blechpaketsegment für einen Stator einer elektrischen Maschine bekannt, der aus Blechen mit trapezförmigen Zähnen für Wicklungen zusammengesetzt ist, wobei die Zähne an ihrem freien Ende in tangentialer Richtung abstehende Rippen aufweisen und die Bleche an einer von den Wicklungen weg weisenden Rückseite Aussparungen aufweisen.

Aus der DE 10 2010 039 590 A1 ist ein Stator oder Rotor eines Generators großen Durchmessers einer Windkraftanlage bekannt, gebildet aus mehreren Blechpaketsegmenten aus axial geschichteten Blechen, wobei jedes Blech ein Joch mit Nuten und Zähnen aufweist, wobei die Zähne durch einen Jochrücken verbunden sind. Diese Literaturstelle beschäftigt sich mit "großen" Generatoren, wobei dort darauf verwiesen wird (Absatz 0013), dass der Durchmesser dieser Maschinen hierbei leicht 4 oder 5 m überschreitet. Durch die zunehmende Größe der Windkraftgeneratoren, die die höheren Leistungen dieser Anlagen zwangsläufig mit sich bringen, wird deren Montage immer schwieriger. Auch für den Transport ergeben sich Probleme, da Generatoren dieser Größe für den Straßentransport nicht mehr geeignet sind. Die Generatoren werden daher meistens in (kleineren) Segmenten angeliefert, die auf der Baustelle dann zum Rotor oder Stator vereinigt werden. Diese Vorrichtung bildet den Oberbegriff des Anspruchs 1. Wie die Bleche der Joche hergestellt werden, ist der Literaturstelle nicht zu entnehmen. Vermutlich werden sie bereits in ihrer gebogenen Endform ausgestanzt, was zu Stanzverlusten bei den Elektroblechen führt.

Ausgehend davon liegt der Erfindung die Aufgabe zugrunde den Blechschnitt bei segmentierten Rotoren oder Statoren von Generatoren großen Durchmessers von Windkraftanlagen in einfaeher Art und Weise weiter zu reduzieren. Die Effizienz der Herstellung und der Maschine soll dabei gesteigert werden. Die Lösung der Aufgabe erfolgt durch einen Stator oder Rotor eines Generators großen Durchmessers einer Windkraftanlage, gebildet aus mehreren Blechpaketsegmenten mit den Merkmalen des Anspruchs 1 sowie ein Verfahren mit den Merkmalen des Anspruchs 10. Bevorzugte Ausgestaltungen der Erfindung sind in den Unteransprüchen und der nachfolgenden Beschreibung gegeben, die einzeln oder in Kombination einen Aspekt der Erfindung darstellen können. Eine Beschreibung eines Merkmals gemeinsam mit einem anderen Merkmal erfolgt nur aus Gründen der vereinfachten Darstellung und soll nicht ausschließen, dass das jeweilige Merkmal auch ohne das andere Merkmal eine Weiterbildung der Erfindung darstellen kann.

Die Lösung der gestellten Aufgabe gelingt also durch einen Stator oder Rotor, gebildet aus mehreren Blechpaketsegmenten aus axial geschichteten gewalzten Elektroblechen, die aus einem oder mehreren Blechcoils vereinzelt wurden, wobei jedes Blech ein Joch mit Nuten und Zähnen aufweist, wobei die Zähne durch einen Jochrücken verbunden sind und wobei der Jochrücken im Bereich zumindest einiger Zähne auf der den Nuten abgewandten Seite der Bleche axial fluchtende Ausnehmungen aufweist, wobei die Blechpaketsegmente durch Biegen der Bleche erzeugt sind, wobei die Ausnehmungen schlitzförmig, keilförmig, trapezförmig, rechteckförmig oder wie eine Schlüssellochkerbe ausgestaltet sind, wobei vor dem Biegen zur Optimierung der Flussführung die Begrenzungskanten des Jochrückens senkrecht zur Walzrichtung des Blechcoils ausgerichtet sind, so dass die Zähne in Walzrichtung liegen, und wobei die Ausnehmungen auf Höhe der Zähne angeordnet sind.

Die Lösung der gestellten Aufgabe gelingt auch durch einen Generator mit einem großen Durchmesser, einer Windkraftanlage, wobei ein Stator und/oder ein Rotor in Umfangsrichtung segmentiert aufgebaut ist/ sind, wobei der Generator zumindest einen erfindungsgemäßen Stator aufweist, wobei die Blechpaketsegmente einen Luftspalt mit einer definierten Krümmung begrenzen.

Die Lösung der gestellten Aufgabe gelingt auch durch ein Verfahren zur Herstellung eines erfindungsgemäßen Blechpaketsegments eines Stators oder Rotors eines Generators großen Durchmessers einer Windkraftanlage durch folgende Schritte:
- Vereinzeln, insbesondere Ausstanzen bzw. Lasern, von Blechen aus einem Blechcoil mit vorgegebener Breite, wobei die Bleche ein Joch mit Nuten und Zähnen aufweisen, wobei die Zähne durch einen Jochrücken verbunden sind und wobei am Jochrücken im Bereich zumindest einiger Zähne auf der den Nuten abgewandten Seite der Bleche in Walzrichtung erstreckende Ausnehmungen vorgesehen werden, wobei die Begrenzungskante des Jochrückens senkrecht zur Walzrichtung des Blechcoils ist,
- Paketieren der Bleche zu einem Blechpaketsegment derart, dass sich axial fluchtende Ausnehmungen des Blechpaketsegments ergeben, so dass sich eine Krümmung eines Luftspalts des Generators einstellen lässt, wobei insbesondere das erfindungsgemäße Blechpaketsegment erhalten wird.

Die Blechpaketsegmente können zu einem erfindungsgemäßen Generator zusammengesetzt werden.

Die Bleche für ein Blechpaketsegment werden nicht mehr in Teilkreisform gestanzt oder gelasert, sondern gerade. Dabei wird für rotatorische Maschinen mit Außenläufer oder Innenläufer für eine spätere Biegung gezielt dementsprechend Material aus dem Jochbereich entnommen, um ein partielles Aufwölben der Bleche beim Biegen weitestgehend zu vermeiden.

Mit anderen Worten, die Begrenzungskanten der Jochrücken sind senkrecht zu der Längserstreckung des Blechcoils. Des Weiteren weist der Jochrücken Ausnehmungen, also Materialentnahmen, auf, die ein Biegen der Bleche gestatten, ohne dass sich die Bleche beim Biegen aufwölben. Bei dieser rein plastischen Verformung fließt Material in unterschiedliche Dicken der Bleche hinein.

Ein Stator einer elektrischen Maschine kann durch eine Mehrzahl von Blechpaketsegmenten zusammengesetzt sein, wobei sich das jeweilige Blechpaketsegmenten beispielsweise über einen Umfangswinkelbereich von im Wesentlichen 90°, im Wesentlichen 72°, im Wesentlichen 45°, im Wesentlichen 40°, im Wesentlichen 36° oder noch kleiner erstreckt. Wenn zwischen den in Umfangsrichtung nachfolgenden Blechpaketsegmenten eine Spielpassung oder ein Spalt vorgesehen sein soll, kann der Umfangswinkelbereich auch um 0,5° bis 1,0° kleiner vorgesehen sein.

Nach der, insbesondere durch Ausstanzen und/oder Lasern, erfolgten Vereinzelung des für das Blechpaketsegment vorgesehenen Blechs vom Blechcoil weist das Blech eine im Wesentlichen rechteckige Grundform auf, aus der an der einen Langseite die Nuten für das jeweilige Joch und an der anderen Langseite die, insbesondere im Wesentlichen schlitzförmigen, Ausnehmungen ausgenommen sind. Die Langseiten können über senkrecht zu den Langseiten verlaufende Kurzseiten miteinander verbunden Sein. Zur Herstellung des Blechpaketsegments kann das Blech in seiner Blechebene plastisch und/oder elastisch gebogen werden, um die Krümmung des Luftspalts der elektrischen Maschine einzustellen. Bei einem Außenläufer kann die Langseite mit den Nuten radial außen und die Langseite mit den Ausnehmungen radial innen vorgesehen sein, während es bei einem Innenläufer umgekehrt sein kann. Die Kurzseiten weisen im Wesentlichen in tangentialer Richtung.

Vorzugsweise sind die die Ausnehmungen begrenzenden und aufeinander zu weisenden Kanten der Ausnehmungen zur Bereitstellung einer Krümmung eines Luftspalts einer elektrischen Maschine aufeinander zu gebogen, wobei die Krümmung allein durch eine plastische Verformung des Blechs bereitgestellt ist. Durch die Ausnehmungen kann ein ausreichend großer Freiraum geschaffen werden, um die die jeweilige Ausnehmung begrenzenden Kanten, die von der Langseite weglaufen, aufeinander zu zu biegen. Grundsätzlich ist es möglich, dass die Kanten mit einer elastischen Vorspannung aufeinander zu gedrückt sind, wobei insbesondere die gewünschte Krümmung beim Paketieren der Bleche zu dem Blechpaketsegment mit einer geeigneten Halte- und/oder Befestigungstechnik in Form gehalten ist. Vorzugsweise ist die Krümmung allein durch eine plastische Verformung des Blechs bereitgestellt. Hierzu kann eine Spaltbreite der jeweiligen Ausnehmung größer als für die vorgesehene Krümmung erforderlich gewählt sein, so dass bei einem Biegen des Blechs die Kanten der jeweiligen Ausnehmung aneinander in Kontakt geraten und um ihren elastischen Verformungsanteil auf eine Relativlage zueinander zurückfedern können, die der gewünschten Krümmung entspricht. Die Krümmung ist dadurch allein durch eine plastische Verformung des Blechs erreicht, so dass es nicht erforderlich ist die gewünschte Form der Bleche gegen ein elastisches Zurückfedern in eine nicht gewünschte Form zu sichern. Die Herstellung und Montage des Blechpaketsegments ist dadurch vereinfacht.

Vorzugsweise sind die Nuten und/oder die, insbesondere zwischen den Nuten ausgebildeten, Zähne im Wesentlichen rechteckig ausgeformt. Besonders bevorzugt weisen die Nuten und Zähne eine gleiche Breite auf. Die Breite wird hierbei entlang der Längsrichtung des Blechs, welche der tangentialen Richtung im gebogenen Zustand entspricht, gemessen. Dadurch ist es möglich zwei vom Blechcoil vereinzelte Bleche, deren Nuten und Zähne aufeinander zu weisen, wobei die Zähne des einen Blechs in die nuten des anderen Blechs eigreifen, durch eine Relativbewegung entlang der Längserstreckung der Nuten und Zähne, die der Radialrichtung im gebogenen Zustand der Bleche entspricht, in einer gemeinsamen Ebene voneinander zu trennen. Beispielsweise können die vereinzelten Belche über Förderelemente, beispielsweise angetriebene Förderbänder und/oder Rollen entlang einer Förderrichtung von einer Vereinzelungsstelle weggefördert werden, wobei ein in Förderrichtung nachfolgendes Förderelement eine höhere Fördergeschwindigkeit bereitstellt und dadurch die mit ihren Zähnen und Nuten ineinandergreifenden Bleche voneinander trennen kann. Der Produktions- und Herstellungsprozess ist dadurch vereinfacht.

Besonders bevorzugt ist vorgesehen, dass nach dem Vereinzeln die in einer gemeinsamen Ebene angeordneten Bleche durch eine Relativbewegung innerhalb der gemeinsamen Ebene, insbesondere entlang einer Längsrichtung der Nuten und/oder Zähne, voneinander beabstandet werden.

Erfindungsgemäß ist die jeweilige Ausnehmung in einem gemeinsamen Umfangswinkelbereich mit dem jeweils zugeordneten Zahn vorgesehen. Vorzugsweise ist die Ausnehmung bezogen auf den Umfangswinkel mittig zu dem jeweiligen zugeordneten Zahn positioniert. Besonders bevorzugt entspricht die Anzahl der Ausnehmungen der Anzahl der Nuten und/oder der Anzahl der Zähne des Blechs. Die Richtungsangabe "Umfangsrichtung" bezieht sich hierbei auf den gebogenen Zustand der Bleche, durch den die gewünschte Krümmung eingestellt ist.

Insbesondere weisen durch eine jeweilige Kurzseite des Blechs begrenzte endseitigen Zähne im Vergleich zu den übrigen Zähnen eine geringere Breite b_{E} als die durchschnittliche Breite b der übrigen Zähne in Umfangsrichtung aufweist, wobei 45% ≤ b_{E}/b ≤ 50% und vorzugsweise 47% ≤ b_{E}/b ≤ 49% gilt. Die Zähne können eine im Wesentlichen konstante Breite in Umfangsrichtung aufweisen, wobei durch die jeweilige Kurzseite des Blechs begrenzten endseitigen Zähne im Vergleich zu den übrigen Zähnen nur eine im Wesentlichen halbe Breite und/oder eine geringfügig geringere als die halbe Breite in Umfangsrichtung auf. Bei einer geringfügig kleineren Breite der endseitigen Zähne als die halbe Breite der übrigen Zähne, kann zwischen in Umfangsrichtung nachfolgenden Blechpaketsegmenten ein Spalt vorgesehen sein. Dadurch ist die Montage der Blechpaketsegmente vereinfacht und das Vorsehen einer anteiligen Ausnehmung in der jeweiligen Kurzseite eingespart, wodurch der Stanzabfall weiter minimiert werden kann.

Die Erfindung lässt sich für Statoren und Rotoren in segmentierter Bauweise einsetzen.

Die Erfindung lässt sich auch bei Innen- und Außenläufer-Maschinen umsetzen. Während bei einem Innenläufer der Stator die Ausnehmungen beim Biegevorgang öffnen, werden die Ausnehmungen, insbesondere bei dementsprechender Materialentnahme bei einem Außenläufer nahezu geschlossen.

Ein weiterer Vorteil ist, dass die Walzrichtung ideal parallel zur Nuten-/Zahnrichtung ausfällt, was insbesondere bei kornnrientiertem Elektroblech die Permeabilität in Walzrichtung komplett 100% in Zahnrichtung hält und damit die Flussführung optimiert und die Maschineneffizienz steigert.

Durch die erfindungsgemäße Bereitstellung der Bleche wird eine verbesserte, also kompaktere Paketierung der Bleche bzw. Blechsegmente erreicht.

Insbesondere lassen sich nunmehr gerade Bleche bei einem passenden Nut-/Zahnbreitenverhältnis ideal ineinandergreifend auf dem Blechcoil anordnen, wodurch sich der Blech-Verschnitt erheblich reduziert.

Je nach Radius von Stator oder Rotor sind unterschiedliche Biegeradien vorzusehen, dabei ist zwischen den erforderlichen Ausnehmungen, was die Formgebung (rechteckförmig, keilförmig, trapezförmig) und der Tiefe in den Jochrücken abzustellen. Die Erfindung sowie weitere Ausgestaltungen der Erfindung werden anhand prinzipiell dargestellter Ausführungsbeispiele näher erläutert, darin zeigen:
- FIG 1: Stand der Technik der Stanzvorgänge,
- FIG 2: Erfindungsgemäßes Stanzen,
- FIG 3: Detailansicht eines Blechs,
- FIG 4: perspektivische Darstellung eins Blechsegments,
- FIG 5: prinzipiellen Querschnitt einer dynamoelektrischen rotatorischen Maschine,
- FIG 6: Windkraftanlage mit einem Generator.

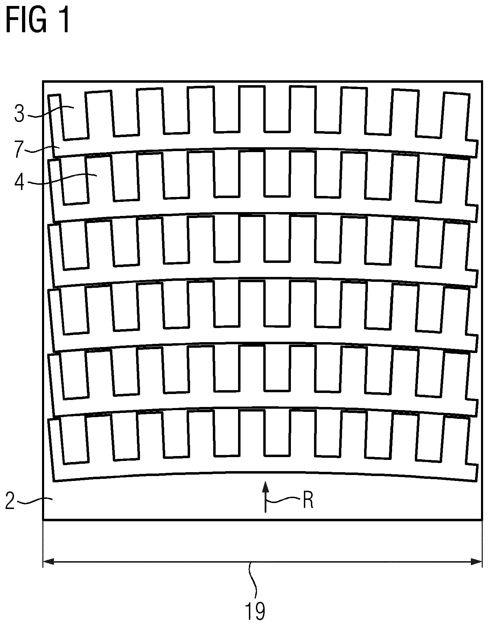

Bleche 1 bzw. Blechsegmente von Statoren 9 und/oder Rotoren 8 dynamoelektrischer großer Maschinen, wie Generatoren 12 von Windkraftanlagen werden bevorzugt so bemessen, dass die maximale Breite 19 eines Blechcoils 2 ausgenutzt wird. Jedoch können diese Bleche 1 gemäß FIG 1 nur untereinander, oder nebeneinander auf das Blechcoil 2 angeordnet werden.

FIG 1 zeigt ein Blechcoil 2 nach Stand der Technik mit einer Teilkreisform mit dem Radius R. Das Blechcoil 2 hat eine Breite 19, die von den Walzwerken vorgegeben ist. Durch das vorgegebene Stanz- oder Lasermuster eines vorgegebenen Blechschnitts tritt dadurch ein vergleichsweise größerer Blechabfall auf.

Die einzelnen Bleche 1, die ein Joch 6 bilden, weisen Zähne 4 auf, die von Nuten 3 beabstandet sind. Die Zähne 4 eines Blechs 1 sind durch einen Jochrücken 7 verbunden.

Die Bleche 1 sind in Teilkreisform mit dem Radius R gestanzt. Die ausgestanzten Nuten 3 und die Zwischenbereiche benachbarter Bleche 1 sind dabei Reinverschnitt, der verschrottet werden muss. Dadurch gibt es Verschnitt-Quoten von teilweise bis zu 50%.

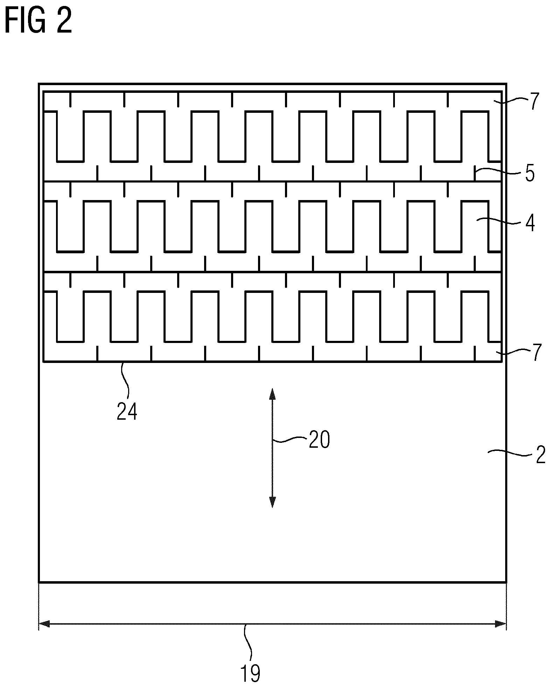

FIG 2 zeigt nun die erfindungsgemäße Art der Bearbeitung eines vorhandenen Blechcoils 2. Dabei wird senkrecht zu einer Walzrichtung 20 des Blechs 1 die Begrenzungskante 24 des Jochrückens 7 angeordnet. Dadurch können insbesondere im Idealfall je nach Breiten der Nuten 3 und Zähne 4 diese verschachtelt angeordnet werden und so der Blechabfall reduziert werden. Um jedoch nunmehr Blechpaketsegmente 11 einer dynamoelektrischen rotatorischen Maschine zu gestalten, ohne dass sich Bleche 1 beim Biegen partiell Aufwölben und so eine Paketierung erschweren, wurden zusätzlich in Walzrichtung 20 Ausnehmungen 5 in die Jochrücken 7 eingestanzt oder gelasert.

Dadurch wird durch einen Biegevorgang ein Blechpaketsegment 11 eines Stators 9 oder Rotors 8 erhalten. Diese Ausnehmungen 5 sind im Bereich der Zähne 4 angeordnet, wobei deren Form als auch deren Tiefe in Walzrichtung 20 durch den späteren Biegeradius R vorgegeben ist. Die parallel zueinander ausfallenden Nutenzähne eines geraden Blechs sind dabei alle in direkter Walzrichtung 20 ausgerichtet.

Ein weiterer Vorteil ist, dass die Walzrichtung 20 der Bleche 1 nunmehr ideal parallel zur Nuten-/Zahnrichtung ausfällt, was insbesondere bei kornorientiertem Elektroblech die Perme-abilität in Walzrichtung komplett 100% in Zahnrichtung hält und damit die Flussführung optimiert. Dies steigert die Effizienz der dynamoelektrischen Maschine.

Grundsätzlich ist der spezifische Blechradius dabei das eigentliche Problem. Bei Ausführung mit gerader Stanz- bzw. Laserkontur können die Bleche 1 bis auf wenige Millimeter zusammen und bei passendem Nut-/Zahn-Verhältnis sogar ineinandergeschoben werden. Dadurch wird der Blechabfall auf ein Minimum reduziert. Anfallender Blechverschnitt muss mitbezahlt werden, der Brutto-Blecheinsatz ist also sehr hoch. Daher wirkt sich diese erfindungsgemäße Optimierung erheblich auf die Produkt-Materialkosten aus, da Elektroblech einer der großen Kostentreiber von Elektromaschinen ist.

Ein weiterer Vorteil ist, dass die Walzrichtung 20 ideal parallel zur Nuten-/Zahnrichtung ausfällt, was insbesondere bei kornorientiertem Elektroblech die Permeabilität in Walzrichtung komplett 100% in Zahnrichtung hält und damit die Flussführung optimiert. Damit ergibt sich eine ideelle Ausrichtung jedes einzelnen Zahnes 4 und jeder Nut 3, was zu der verbesserten Flussführung führt.

Die Einbringung einer Ausnehmung 5 oder einer "Schlüssellochkerbe" im Jochrücken 7 gewährleistet eine gezielte Biegung mit einem vorgegebenen Radius R im Jochbereich. Ein Vorbiegen mittels Biegevorrichtungen vor Beschichtung eines Blechpaketsegments 11, oder ein Biegen während des Schichtprozesses der Bleche des Blechpaketsegments 11 sind dabei denkbar.

Die parallel zueinander ausgerichteten Zähnen 4 eines geraden Blechs sind dabei alle in direkter Walzrichtung ausgerichtet. Durch die anschließende Biegung werden die Zähne 4 eines Stators 9 bei einem Außenläufer aufgespreizt und die Ausnehmungen 5 schließen sich. Dementsprechend werden die Zähne 4 eines Stators 9 bei einem Innenläufer so gebogen, dass sich die Ausnehmungen 5 öffnen.

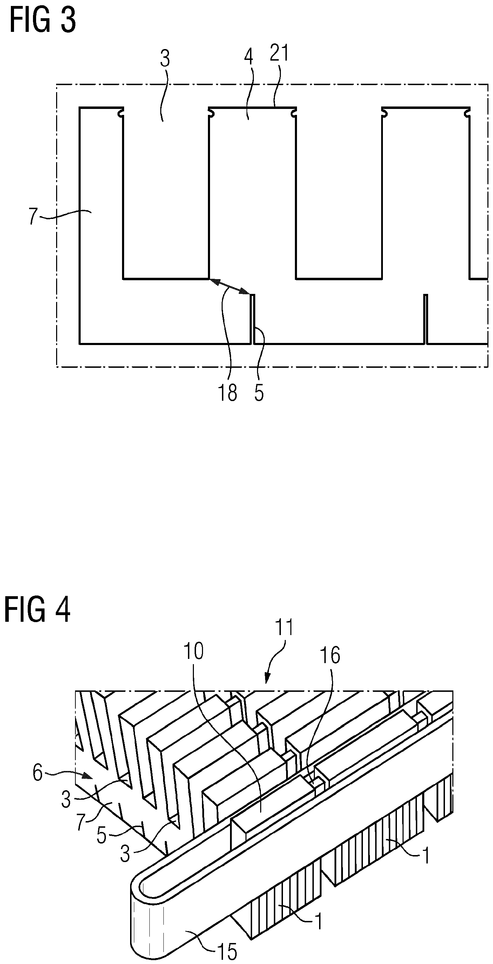

FIG 3 zeigt in einer Detaildarstellung einen Ausschnitt eines Blechs 1. Dabei sind die Ausnehmungen 5 als Schlitz im Bereich des Jochrückens 7 der Zähne 4 angeordnet. Dies hat den Vorteil, dass eine ausreichende Stegdicke 18 vorhanden ist, die Flussführung vom Zahn 4 über den Jochrücken zu den benachbarten Zähnen 4 nur vergleichsweise gering beeinträchtigt. Durch die Tiefe der Ausnehmung 5, und/oder der Form und/oder der Position der Ausnehmungen im Jochrücken 7 kann der Biegeradius R beeinflusst werden. Im Zahnkopf 21 der Zähne 4 sind eingestanzte Einkerbungen für einen Nutverschluss vorhanden.

FIG 4 zeigt in einer Teilperspektive ein Blechpaketsegment 11, das aus einzelnen Blechen 1 aufgebaut ist, wobei das Blechpaketsegment 11 sich in axiale Teilblechpaketen 10 unterteilt, die im Betrieb einer dynamoelektrischen rotatorischen Maschine, beispielsweise eines Generators 12 eine zusätzliche Kühlung gestatten. Die Teilblechpakete 10 sind durch Abstandshalter 16 axial voneinander getrennt. Beispielhaft ist eine Spule 15 in einer Nut 3 des Blechpaketsegments 11 angeordnet. Druckplatten paketieren die Blechpaketsegmente 11.

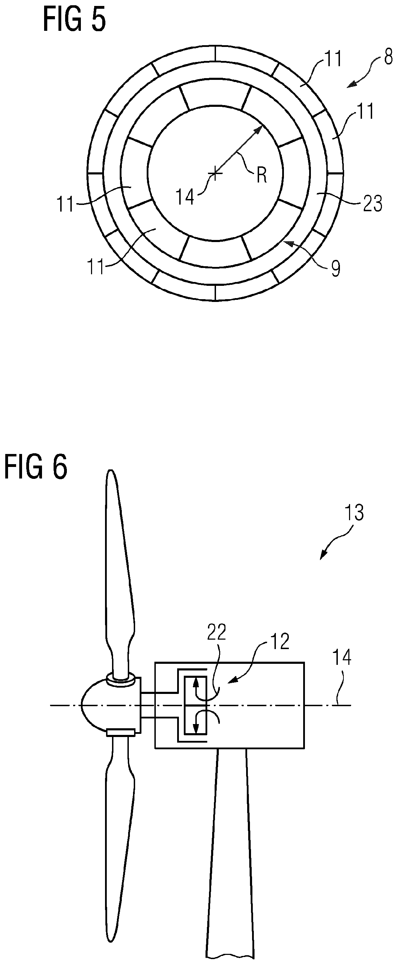

FIG 5 zeigt in einem Querschnitt eine beispielhafte Ausführung einer dynamoelektrischen rotatorischen Maschine beispielsweise eines Generators 12 ohne Wicklungssystem, die als Außenläufer ausgeführt ist. Ein Stator 9 ist in Umfangsrichtung durch Blechpaketsegmente 11 mit einem Radius R aufgebaut. Die einzelnen Segmente sind dabei, beispielsweise wie in FIG 4, ausgeführt. Durch die Ausnehmungen 5 im Jochrücken 7 lässt sich der Radius R in einfacher Art und Weise gestalten. Ein Rotor 8, der durch einen Luftspalt 23 vom Stator 9 beabstandet ist und sich um eine Achse 14 dreht, kann ebenfalls durch erfindungsgemäße Blechpaketsegmente 11 aufgebaut sein.

FIG 6 zeigt eine prinzipiell dargestellte Windkraftanlage 13 mit einem direkt angetriebenen Generator 12, der als Außenläufer ausgeführt ist. Kühlluftströme 22 treten dabei bei dem Stator 9 über Kühlkanäle in das Blechpaket.

## Patentansprüche

1. Stator (9) oder Rotor (8) eines Generators großen Durchmessers einer Windkraftanlage, gebildet aus mehreren Blechpaketsegmenten (11) aus axial geschichteten gewalzten Elektroblechen (1), die aus einem oder mehreren Blechcoils (2) vereinzelt wurden, wobei jedes Blech (1) ein Joch (6) mit Nuten (3) und Zähnen (4) aufweist, wobei die Zähne (4) durch einen Jochrücken (7) verbunden sind, wobei der Jochrücken (7) im Bereich zumindest einiger Zähne (4) auf der den Nuten (3) abgewandten Seite der Bleche (1) axial fluchtende sich in Walzrichtung (20) des Blechcoils (2) erstreckende Ausnehmungen (5) aufweist, wobei die Blechpaketsegmente (11) durch Biegen der Bleche (1) erzeugt sind, wobei die Ausnehmungen (5) schlitzförmig, keilförmig, trapezförmig, rechteckförmig oder wie eine Schlüssellochkerbe ausgestaltet sind, wobei vor dem Biegen zur Optimierung der Flussführung die Begrenzungskanten (24) des Jochrückens (7) senkrecht zur Walzrichtung (20) des Blechcoils (2) ausgerichtet sind, so dass die Zähne (4) in Walzrichtung (20) liegen, und wobei die Ausnehmungen (5) auf Höhe der Zähne (4) angeordnet sind.

2. Stator (9) oder Rotor (8) mit mehreren Blechpaketsegmenten (11) nach Anspruch 1, **dadurch gekennzeich net** , dass die Ausnehmungen (5) keil-, trapez- oder rechteckförmig ausgestaltet sind.

3. Stator (9) oder Rotor (8) mit mehreren Blechpaketsegmenten (11) nach Anspruch 1 oder 2, **dadurch gekennz eichnet** , dass die Nuten (3) und/oder die Zähne (4) im Wesentlichen rechteckig ausgeformt sind.

4. Stator (9) oder Rotor (8) mit mehreren Blechpaketsegmenten (11) nach einem der Ansprüche 1 bis 3, **dadurch ge kennzeichnet**, dass die Nuten (3) und Zähne (4) eine gleiche Breite aufweisen.

5. Stator (9) oder Rotor (8) mit mehreren Blechpaketsegmenten (11) nach einem der Ansprüche 1 bis 4, **dadurch ge kennzeichnet** , dass durch eine jeweilige Kurzseite des Blechs begrenzte endseitigen Zähne im Vergleich zu den übrigen Zähnen (4) eine geringere Breite b_{E} als die durchschnittliche Breite b der übrigen Zähne (4) in Umfangsrichtung aufweist, wobei 45% ≤ b_{E}/b ≤ 50% und vorzugsweise 47% ≤ b_{E}/b ≤ 49% gilt.

6. Stator (9) oder Rotor (8) mit mehreren Blechpaketsegmenten (11) nach einem der Ansprüche 1 bis 5, **dadurch ge kennzeichnet**, dass die jeweilige Ausnehmung (5) in einem gemeinsamen Umfangswinkelbereich mit dem jeweils zugeordneten Zahn (4) vorgesehen ist, wobei insbesondere die Ausnehmung (5) bezogen auf den Umfangswinkel mittig zu dem jeweiligen zugeordneten Zahn (4) positioniert ist.

7. Stator (9) oder Rotor (8) mit mehreren Blechpaketsegmenten (11) nach einem der Ansprüche 1 bis 6, **dadurch gekennzeichnet, dass** die die Ausnehmungen (5) begrenzenden und aufeinander zu weisenden Kanten der Ausnehmungen (5) zur Bereitstellung einer Krümmung eines Luftspalts (23) des Generators aufeinander zu gebogen sind, wobei die Krümmung allein durch eine plastische Verformung des Blechs (1) bereitgestellt ist.

8. Stator (9) oder Rotor (8) mit mehreren Blechpaketsegmenten (11) nach einem der Ansprüche 1 bis 7, **dadurch ge kennzeichnet**, dass der Jochrücken (7) derart gebogen ist, dass die Ausnehmungen (5) geschlossen oder geöffnet sind.

9. Generator, mit einem großen Durchmesser, einer Windkraftanlage, wobei ein Stator (9) und/oder ein Rotor (8) in Umfangsrichtung segmentiert aufgebaut ist/ sind wobei der Generator zumindest einen Stator (9) nach einem der Ansprüche 1 bis 8 aufweist, wobei die Blechpaketsegmente (11) einen Luftspalt (23) mit einer definierten Krümmung begrenzen.

10. Verfahren zur Herstellung eines Blechpaketsegments (11) eines Stators (9) oder Rotors (8) eines Generators großen Durchmessers einer Windkraftanlage nach einem der Ansprüche 1 bis 8 durch folgende Schritte:
- Vereinzeln, insbesondere Ausstanzen bzw. Lasern, von Blechen (1) aus einem Blechcoil (2) mit vorgegebener Breite (19), wobei die Bleche (1) ein Joch (6) mit Nuten (3) und Zähnen (4) aufweisen, wobei die Zähne (4) durch einen Jochrücken (7) verbunden sind und wobei am Jochrücken (7) im Bereich zumindest einiger Zähne (4) auf der den Nuten (3) abgewandten Seite der Bleche (1) in Walzrichtung (20) erstreckende Ausnehmungen (5) vorgesehen werden, wobei die Begrenzungskante (24) des Jochrückens (7) senkrecht zur Walzrichtung (20) des Blechcoils (2) ist,
- Paketieren der Bleche (1) zu einem Blechpaketsegment (11) derart, dass sich axial fluchtende Ausnehmungen (5) des Blechpaketsegments (11) ergeben, so dass sich eine Krümmung eines Luftspalts (23) des Generators einstellen lässt.

11. Verfahren nach Anspruch 10, **dadurch gekenn** -**zeichnet**, dass beim Vereinzelungsvorgang, insbesondere Stanzvorgang, die Zähne (4) in die Nuten (3) eingreifen, wobei die Breite der Nuten (3) der Breite der Zähne (4) entspricht.

12. Verfahren nach Anspruch 10 oder 11, **dadurch ge kennzeichnet**, dass während oder nach dem Paketieren der Bleche (1) ein Biegen erfolgt, derart, dass sich dadurch die Ausnehmungen (5) verändern, insbesondere durch Öffnen oder Schließen, und sich so die Luftspaltkrümmung Generators einstellt.

13. Verfahren nach einem der Ansprüche 10 bis 12, **dadur ch gekennzeichnet** , dass die Ausnehmungen (5), insbesondere als Schlitze im Jochrücken (7) auf Höhe der Zähne (4) eingestanzt werden.

14. Verfahren nach einem der Ansprüche 10 bis 13, **dadur ch gekennzeichnet**, dass nach dem Vereinzeln die in einer gemeinsamen Ebene angeordneten Bleche (1) durch eine Relativbewegung innerhalb der gemeinsamen Ebene, insbesondere entlang einer Längsrichtung der Nuten (3) und/oder Zähne (4), voneinander beabstandet werden.

15. Verfahren nach einem der Ansprüche 10 bis 14, **dadur ch gekennzeichnet**, dass die Blechpaketsegmente (11) zu einem Generator nach Anspruch 9 zusammengesetzt werden.

## Claims

1. Stator (9) or rotor (8) of a large-diameter generator of a wind turbine, formed from a plurality of laminated-core segments (11) composed of axially layered, rolled electrical metal sheets (1), which have been individually separated from one or more sheet-metal coils (2), wherein each metal sheet (1) has a yoke (6) with grooves (3) and with teeth (4), wherein the teeth (4) are connected by a yoke rear (7), wherein the yoke rear (7), in the region of at least some teeth (4) on that side of the metal sheets (1) which faces away from the grooves (3), has axially aligned recesses (5) extending in the rolling direction (20) of the sheet-metal coil (2), wherein the laminated-core segments (11) are produced by bending the metal sheets (1), wherein the recesses (5) are of slot-shaped, wedge-shaped, trapezoidal or rectangular form or are in the form of a keyhole notch, wherein, prior to the bending to optimize the flux guidance, the delimiting edges (24) of the yoke rear (7) are oriented perpendicularly to the rolling direction (20) of the sheet-metal coil (2) such that the teeth (4) lie in the rolling direction (20), and wherein the recesses (5) are arranged level with the teeth (4).

2. Stator (9) or rotor (8) having a plurality of laminated-core segments (11) according to Claim 1, **characterized in that** the recesses (5) are of wedge-shaped, trapezoidal or rectangular form.

3. Stator (9) or rotor (8) having a plurality of laminated-core segments (11) according to Claim 1 or 2, **characterized in that** the grooves (3) and/or the teeth (4) are of substantially rectangular form.

4. Stator (9) or rotor (8) having a plurality of laminated-core segments (11) according to one of Claims 1 to 3, **characterized in that** the grooves (3) and teeth (4) have the same width.

5. Stator (9) or rotor (8) having a plurality of laminated-core segments (11) according to one of Claims 1 to 4, **characterized in that** end-side teeth delimited by a respective short side of the metal sheet have, in comparison with the remaining teeth (4), a smaller width b_{E} than the average width b of the remaining teeth (4) in the circumferential direction, wherein 45% ≤ b_{E}/b ≤ 50% and preferably 47% ≤ b_{E}/b ≤ 49% applies.

6. Stator (9) or rotor (8) having a plurality of laminated-core segments (11) according to one of Claims 1 to 5, **characterized in that** the respective recess (5) is provided with the respectively assigned tooth (4) in a common circumferential-angle range, wherein in particular, with respect to the circumferential angle, the recess (5) is positioned centrally in relation to the respective assigned tooth (4).

7. Stator (9) or rotor (8) having a plurality of laminated-core segments (11) according to one of Claims 1 to 6, **characterized in that**, for the purpose of providing a curvature of an air gap (23) of the generator, the edges of the recesses (5) that delimit the recesses (5) and face towards one another are bent towards one another, wherein the curvature is provided solely by way of plastic deformation of the metal sheet (1).

8. Stator (9) or rotor (8) having a plurality of laminated-core segments (11) according to one of Claims 1 to 7, **characterized in that** the yoke rear (7) is bent in such a way that the recesses (5) are closed or open.

9. Generator, having a large diameter, of a wind turbine, wherein a stator (9) and/or a rotor (8) are/is constructed in a segmented manner in the circumferential direction, wherein the generator comprises at least one stator (9) according to one of Claims 1 to 8, wherein the laminated-core segments (11) delimit an air gap (23) with a defined curvature.

10. Method for producing a laminated-core segment (11) of a stator (9) or rotor (8) of a large-diameter generator of a wind turbine according to one of Claims 1 to 8 by the following steps:
- individually separating, in particular punching out or lasering out, metal sheets (1) from a sheet-metal coil (2) with a predefined width (19), wherein the metal sheets (1) have a yoke (6) with grooves (3) and with teeth (4), wherein the teeth (4) are connected by a yoke rear (7), and wherein recesses (5) extending in the rolling direction (20) are provided on the yoke rear (7) in the region of at least some teeth (4) on that side of the metal sheets (1) which faces away from the grooves (3), wherein the delimiting edge (24) of the yoke rear (7) is perpendicular to the rolling direction (20) of the sheet-metal coil (2),
- stacking the metal sheets (1) to form a laminated-core segment (11) in such a way that axially aligned recesses (5) of the laminated-core segment (11) are obtained, so that a curvature of an air gap (23) of the generator can be set.

11. Method according to Claim 10, **characterized in that**, during the individual separation process, in particular punching process, the teeth (4) engage into the grooves (3), wherein the width of the grooves (3) corresponds to the width of the teeth (4).

12. Method according to Claim 10 or 11, **characterized in that**, during or after the stacking of the metal sheets (1), bending is realized in such a way that the recesses (5) are consequently changed, in particular through opening or closing, and in this way the air-gap curvature of the generator is set.

13. Method according to one of Claims 10 to 12, **characterized in that** the recesses (5) are formed by punching, in particular as slots, in the yoke rear (7) at the height of the teeth (4).

14. Method according to one of Claims 10 to 13, **characterized in that**, after the individual separation, the metal sheets (1) arranged in a common plane are spaced apart from one another by way of a relative movement within the common plane, in particular along a longitudinal direction of the grooves (3) and/or teeth (4) .

15. Method according to one of Claims 10 to 14, **characterized in that** the laminated-core segments (11) are assembled to form a generator according to Claim 9.

## Revendications

1. Stator (9) ou rotor (8) d'un générateur de grand diamètre d'une éolienne, formé de plusieurs segments de noyau feuilletés (11) constitués de tôles électriques (1) laminées en couches axiales, qui ont été séparées à partir d'une ou de plusieurs bobines (2) de tôles métalliques, chaque tôle métallique (1) présentant un barreau (6) avec des rainures (3) et des dents (4), les dents (4) étant reliées par un dos (7) de barreau, le dos (7) de barreau présentant, dans la zone d'au moins certaines dents (4), sur le côté des tôles métalliques (1) opposé aux rainures (3), des entailles (5) alignées axialement et s'étendant dans la direction de laminage (20) de la bobine (2) de tôles métalliques, les segments de noyau feuilletés (11) étant produits par pliage des tôles métalliques (1), les entailles (5) étant en forme de fente, de coin, de trapèze, de rectangle ou d'encoche en trou de serrure, les bords (24) de délimitation du dos (7) de barreau étant, avant le pliage, pour optimiser le guidage du flux, orientés perpendiculairement à la direction de laminage (20) de la bobine (2) de tôles métalliques, de sorte que les dents (4) se trouvent dans la direction de laminage (20), et que les entailles (5) sont agencées à hauteur des dents (4).

2. Stator (9) ou rotor (8) avec plusieurs segments de noyau feuilletés (11) selon la revendication 1, **caractérisé en ce que** les entailles (5) sont en forme de coin, de trapèze ou de rectangle.

3. Stator (9) ou rotor (8) avec plusieurs segments de noyau feuilletés (11) selon la revendication 1 ou la revendication 2, **caractérisé en ce que** les rainures (3) et/ou les dents (4) sont de forme essentiellement rectangulaire.

4. Stator (9) ou rotor (8) comportant plusieurs segments de noyau feuilletés (11) selon l'une des revendications 1 à 3, **caractérisé en ce que** les rainures (3) et les dents (4) présentent une même largeur.

5. Stator (9) ou rotor (8) comportant plusieurs segments de noyau feuilletés (11) selon l'une des revendications 1 à 4, **caractérisé en ce que** les dents d'extrémité délimitées par un petit côté respectif de la tôle métallique présentent, par rapport aux autres dents (4), une largeur b_{E} inférieure à la largeur moyenne b des autres dents (4) dans la direction circonférentielle, avec 45% ≤ b_{E}/b ≤ 50% et de préférence 47% ≤ b_{E}/b ≤ 49%.

6. Stator (9) ou rotor (8) avec plusieurs segments de noyau feuilletés (11) selon l'une des revendications 1 à 5, **caractérisé en ce que** l'entaille respective (5) est prévue dans une zone d'angle de périmètre commune avec la dent (4) respectivement associée, l'entaille (5) étant notamment positionnée au milieu de la dent (4) respectivement associée par rapport à l'angle de périmètre.

7. Stator (9) ou rotor (8) avec plusieurs segments de noyau feuilletés (11) selon l'une des revendications 1 à 6, **caractérisé en ce que** les bords des entailles (5) délimitant les entailles (5) et se faisant face sont pliés les uns vers les autres pour fournir une courbure d'un entrefer (23) du générateur, la courbure étant assurée uniquement par une déformation plastique de la tôle métallique (1).

8. Stator (9) ou rotor (8) avec plusieurs segments de noyau feuilletés (11) selon l'une des revendications 1 à 7, **caractérisé en ce que** le dos (7) de barreau est plié de telle sorte que les entailles (5) sont fermées ou ouvertes.

9. Générateur de grand diamètre d'une éolienne, dans lequel un stator (9) et/ou un rotor (8) est/sont construit(s) de manière segmentée dans la direction circonférentielle, le générateur présentant au moins un stator (9) selon l'une des revendications 1 à 8, les segments de noyau feuilletés (11) délimitant un entrefer (23) avec une courbure définie.

10. Procédé de réalisation, par les étapes suivantes, d'un segment de noyau feuilleté (11) d'un stator (9) ou rotor (8) d'un générateur de grand diamètre d'une éolienne selon l'une des revendications 1 à 8 :
- séparer, en particulier par poinçonnage ou utilisation d'un laser, des tôles (1) à partir d'une bobine de tôle (2) de largeur prédéfinie (19), les tôles (1) présentant un barreau (6) avec des rainures (3) et des dents (4), les dents (4) étant reliées par un dos (7) de barreau et des entailles (5) s'étendant dans la direction de laminage (20) étant prévus sur le dos (7) de barreau dans la zone d'au moins certaines dents (4) sur le côté des tôles (1) opposé aux rainures (3), le bord de délimitation (24) du dos (7) de barreau étant perpendiculaire à la direction de laminage (20) de la bobine de tôle (2),
- mettre en paquet les tôles (1) en un segment de paquet de tôles (11), de telle sorte qu'il en résulte des entailles (5) axialement alignées du segment de paquet de tôles (11), permettant de régler une courbure d'un entrefer (23) du générateur,

11. Procédé selon la revendication 10, **caractérisé en ce que** lors du processus de séparation, notamment du processus de poinçonnage, les dents (4) s'engagent dans les rainures (3), la largeur des rainures (3) correspondant à la largeur des dents (4).

12. Procédé selon la revendication 10 ou la revendication 11, **caractérisé en ce que** le cintrage a lieu pendant ou après la mise en paquet des tôles (1), de telle sorte que les entailles (5) changent, notamment à l'ouverture ou à la fermeture, et ajuste ainsi la courbure de l'entrefer du générateur.

13. Procédé selon l'une des revendications 10 à 12, **caractérisé en ce que** les entailles (5), notamment sous forme de fentes, sont poinçonnées sur le dos (7) de barreau, au niveau des dents (4).

14. Procédé selon l'une des revendications 10 à 13, **caractérisé en ce qu'**après la séparation, les tôles (1) disposées dans un plan commun sont déplacées d'un mouvement relatif à l'intérieur du plan commun, notamment selon une direction longitudinale des rainures (3) et/ou des dents (4), espacées les unes des autres.

15. Procédé selon l'une des revendications 10 à 14, **caractérisé en ce que** les segments de noyau feuilletés (11) sont assemblés en un générateur selon la revendication 9.
